# EUROPÄISCHE PATENTSCHRIFT

(11) **EP 3 584 003 B1**
(45) Veröffentlichungstag und Bekanntmachung des Hinweises auf die Patenterteilung: **29.09.2021**
(21) Anmeldenummer: 19179913.9
(22) Anmeldetag: 13.06.2019
(51) Int. Cl.: B01F 3/04, B01F 5/04, B01F 5/06, B01F 15/06, F01N 3/20, B01F 5/00

(54) **MISCHER**
MIXER
MÉLANGEUR

(30) Priorität: 20.06.2018 DE 102018114755
(43) Veröffentlichungstag der Anmeldung: 25.12.2019
(73) Patentinhaber: Purem GmbH, 66539 Neunkirchen (DE)
(72) Erfinder: Kurpejovic, Enver, 73230 Kirchheim unter Teck (DE); Uysal, Fatih, 73760 Ostfildern (DE); Friedrich, Florian, 73733 Esslingen (DE); Semenov, Oleksandr, 73207 Plochingen (DE); Vempati, Krishna Kumar, 73730 Esslingen (DE)
(74) Vertreter: Ruttensperger Lachnit Trossin Gomoll

(56) Entgegenhaltungen:
- EP-A1- 3 321 484
- DE-A1-102016 104 361
- US-A1- 2005 013 756
- US-A1- 2017 159 526
- US-A1- 2018 080 360

## Beschreibung

Die vorliegende Erfindung betrifft einen Mischer zur Durchmischung von in einem Abgasführungskanal einer Brennkraftmaschine strömendem Abgas mit in den Abgasführungskanal eingespritztem Reaktionsmittel, umfassend einen Mischerkörper mit einem Reaktionsmittelaufnahmekanal, einer Abgaseintrittsöffnungsanordnung mit einer Mehrzahl von zu dem Reaktionsmittelaufnahmekanal führenden Abgaseintrittsöffnungen und wenigstens einem von dem Reaktionsmittelaufnahmekanal wegführenden Abgabekanal mit einer Abgabekanalöffnung zur Abgabe eines Reaktionsmittel/Abgas-Gemisches aus dem Mischerkörper

Ein derartiger Mischer zur Durchmischung von in einem Abgaskanal einer Brennkraftmaschine strömendem Abgas mit in den Abgaskanal eingespritztem Reaktionsmittel ist aus der DE 10 2016 104 361 A1 bekannt. Dieser bekannte Mischer ist im Wesentlichen scheibenartig ausgebildet und umfasst miteinander verbundene plattenartige Mischerteile. Die mit verschiedenen Auswölbungsbereichen aufgebauten Mischerteile begrenzen zusammen einen Reaktionsmittelaufnahmekanal, in welchen das von einem Injektor abgegebene Reaktionsmittel eingeleitet wird und in welchen über die Abgaseintrittsöffnungsanordnung in einem Abgaskanal strömendes Abgas eintritt. Die beiden Mischerteile begrenzen zusammen zwei von dem Reaktionsmittelaufnahmekanal wegführende Abgabekanäle, über welche das bzw. der größte Teil des in dem Mischer gebildeten Gemisches aus Reaktionsmittel und Abgas in den stromabwärts folgenden Bereich des Abgabekanals abgegeben wird.

Ein Mischer gemäß dem Oberbegriff des Anspruchs 1 ist aus der US 2017/159526 A1 bekannt. Bei diesem bekannten Mischer ist in einem von Abgas bzw. einem Gemisch aus Abgas und Reaktionsmittel durchströmbaren Mischerkörper eine elektrisch erregbare Heizanordnung vorgesehen. Diese ist mit einem von dem Gemisch aus Abgas und Reaktionsmittel durchströmbaren, durch elektrische Erregung heizbaren Wabenkörper aufgebaut.

Die EP 3 321 484 A1 offenbart eine Reaktionsmittelabgabeanordnung mit einem in einen Abgasströmungskanal näherungsweise orthogonal zu einer Abgas-Hauptströmungsrichtung eingreifenden Reaktionsmittelabgabekörper. Eine ein Reaktionsmittelaufnahmevolumen umgebende Innenwandung einer Körperwandung des Reaktionsmittelabgabekörpers ist an ihrer vom Reaktionsmittelaufnahmevolumen abgewandten Außenseite von einem Mantelheizleiter windungsartig umgeben.

Es ist die Aufgabe der vorliegenden Erfindung, einen Mischer derart weiterzubilden, dass dieser eine verbesserte Durchmischung von Reaktionsmittel und Abgas bewirkt.

Gemäß der vorliegenden Erfindung wird diese Aufgabe gelöst durch einen Mischer zur Durchmischung von in einem Abgasführungskanal einer Brennkraftmaschine strömendem Abgas mit in den Abgasführungskanal eingespritztem Reaktionsmittel gemäß Anspruch 1. Dieser umfasst einen Mischerkörper mit
- einem Reaktionsmittelaufnahmekanal,
- einer Abgaseintrittsöffnungsanordnung mit einer Mehrzahl von zu dem Reaktionsmittelaufnahmekanal führenden Abgaseintrittsöffnungen,
- wenigstens einem von dem Reaktionsmittelaufnahmekanal wegführenden Abgabekanal mit einer Abgabekanalöffnung zur Abgabe eines Reaktionsmittel/Abgas-Gemisches aus dem Mischerkörper.

Dabei ist an dem Mischerkörper eine elektrisch erregbare Heizanordnung vorgesehen.

Durch das Zuordnen einer derartigen Heizanordnung zu dem Mischer kann dessen Mischerkörper erwärmt werden, so dass das in Form eines Sprays bzw. in Tröpfchenform in den Mischer eingeleitete Reaktionsmittel insbesondere dann, wenn es auf Innenoberflächenbereiche des Mischerkörpers auftrifft, erwärmt und dabei verdampft wird und sich effizient mit dem den Mischerkörper auch durchströmenden Abgas mischt. Somit kann insbesondere auch dann, wenn am Betriebsbeginn einer Brennkraftmaschine die verschiedenen Systembereiche einer Abgasanlage, insbesondere auch der Mischer, vergleichsweise niedrige Temperaturen aufweisen, für eine verbesserte Verdampfung und somit Durchmischung des Reaktionsmittels mit dem Abgas gesorgt werden.

Für eine betriebssicheren Ausgestaltung umfasst die Heizanordnung einen geschichteten Aufbau mit einer dem Mischerkörper zugewandt oder/und an diesem anliegend angeordneten ersten Isolierlage, einer an der von dem Mischerkörper abgewandten Seite der ersten Isolierlage angeordneten, durch elektrische Erregung erwärmbaren Heizlage und einer an einer vom Mischerkörper abgewandten Seite der Heizlage angeordneten zweiten Isolierlage.

Zur Festlegung der Heizanordnung am Mischerkörper ist an einer von der Heizlage abgewandten Seite der zweiten Isolierlage ein an dem Mischerkörper festgelegtes Abdeckelement vorgesehen, wobei die erste Isolierlage, die Heizlage und die zweite Isolierlage zwischen dem Mischerkörper und dem Abdeckelement gehalten sind.

Um dabei den Reaktionsmittelstrom bzw. auch den Abgasstrom im Inneren des Mischers nicht zu beeinträchtigen, wird vorgeschlagen, dass die Heizanordnung an einer Außenseite des Mischerkörpers angeordnet ist.

Um auch in einem größeren Flächenbereich eine Erwärmung des Mischerkörpers zu erreichen, wird vorgeschlagen, dass die Heizlage einen gewunden verlaufenden Heizleiter umfasst.

Wenigstens eine Isolierlage kann mit Glimmermaterial bzw. als Glimmermatte aufgebaut sein. Ferner kann das Abdeckelement mit Metallmaterial aufgebaut sein. Dies ist insbesondere dann von Vorteil, wenn auch der Mischerkörper mit Metallmaterial aufgebaut ist. In diesem Fall kann das Abdeckelement materialschlüssig, vorzugsweise durch Verschweißen, am Mischerkörper festgelegt sein.

Für eine effiziente thermische Wechselwirkung des Reaktionsmittels mit der Heizanordnung wird vorgeschlagen, dass der Reaktionsmittelaufnahmekanal einen Reaktionsmittelaufnahmeendbereich und einen Abgabeendbereich aufweist, wobei der wenigstens eine Abgabekanal von dem Reaktionsmittelaufnahmekanal im Abgabeendbereich wegführt, und dass die Heizanordnung wenigstens im Bereich des Abgabeendbereichs des Reaktionsmittelaufnahmekanals am Mischerkörper angeordnet ist.

Von dem Reaktionsmittelaufnahmekanal können zwei Abgabekanäle vorzugsweise in im Wesentlichen entgegengesetzten Richtungen wegführen. Bei derartiger Ausgestaltung ist vorzugsweise vorgesehen, dass die Heizanordnung in einem Bereich zwischen den beiden Abgabekanälen am Mischerkörper angeordnet ist. In diesem Bereich des Mischerkörpers bzw. des darin gebildeten Reaktionsmittelaufnahmekanals wird ein Großteil des in diesen eingeleiteten Reaktionsmittels auf die Oberfläche des Mischerkörpers auftreten, so dass eine wirksame Erwärmung des Reaktionsmittel erreicht werden kann.

Der Mischerkörper kann beispielsweise ein im Wesentlichen plattenartiges erstes Mischerkörperteil und ein mit dem ersten Mischerkörperteil verbundenes, im Wesentlichen plattenartiges zweites Mischerkörperteil umfassen.

Insbesondere dann, wenn der Mischerkörper mit den beiden Mischerkörperteilen ausgebildet ist, kann in baulich einfacher Art und Weise vorgesehen werden, dass das erste Mischerkörperteil einen den Reaktionsmittelaufnahmekanal begrenzenden ersten Auswölbungsbereich und beidseits des ersten Auswölbungsbereichs einen mit dem zweiten Mischerkörperteil verbundenen oder/und einen Abgabekanal begrenzenden Plattenbereich umfasst, oder/und dass das zweite Mischerkörperteil einen den Reaktionsmittelaufnahmekanal begrenzenden zweiten Auswölbungsbereich und einen den wenigstens einen Abgabekanal begrenzenden dritten Auswölbungsbereich umfasst. Dabei ist insbesondere dann, wenn das zweite Mischerkörperteil in Richtung stromabwärts im Abgasstrom orientiert angeordnet ist, vorzugsweise die Heizanordnung am zweiten Mischerkörperteil angeordnet.

Zur effizienten Abgabe des Gemisches aus Reaktionsmittel und Abgas kann eine Austrittsöffnungsanordnung mit einer Mehrzahl von aus dem Reaktionsmittelaufnahmekanal oder/und dem wenigstens einen Abgabekanal herausführenden Austrittsöffnungen vorgesehen sein.

Die vorliegende Erfindung betrifft ferner eine Abgasanlage für eine Brennkraftmaschine, umfassend einen Abgasführungskanal, einen erfindungsgemäß aufgebauten Mischer und eine Reaktionsmitteleinspritzanordnung zum Einspritzen von Reaktionsmittel in den Reaktionsmittelaufnahmekanal des Mischers.

Dabei kann für eine effiziente Übertragung von Wärme auf den Mischerkörper vorgesehen sein, dass die Heizanordnung an einer bezüglich einer Abgasströmungsrichtung in Richtung stromabwärts orientierten Seite des Mischerkörpers angeordnet ist.

Der Mischer kann in dem Abgasführungskanal im Wesentlichen die gesamte Strömungsquerschnittfläche des Abgasführungskanals bedecken. Ferner kann der Reaktionsmittelaufnahmekanal oder/und der wenigstens eine Abgabekanal sich im Wesentlichen orthogonal zu einer Abgasströmungsrichtung im Abgasführungskanal erstrecken. Um eine möglichst effiziente Durchmischung von Reaktionsmittel und Abgas zu erzwingen, wird ferner vorgeschlagen, dass die Reaktionsmitteleinspritzanordnung Reaktionsmittel im Wesentlichen orthogonal zu der Abgasströmungsrichtung im Abgasführungskanal einspritzt. Zur Umsetzung des in das Abgas eingeleiteten Reaktionsmittels ist vorzugsweise stromabwärts des Mischers eine Katalysatoranordnung zur selektiven Reduktion oder/und eine Partikelfilteranordnung vorgesehen.

Die vorliegende Erfindung wird nachfolgend mit Bezug auf die beiliegenden Figuren detailliert beschrieben. Es zeigt:
- Fig. 1: in prinzipieller Darstellung einen Teil einer Abgasanlage mit einem in einen Abgasführungskanal integrierten Mischer;
- Fig. 2: eine perspektivische Ansicht eines bei der Abgasanlage der Fig. 1 eingesetzten Mischers;
- Fig. 3: eine Axialansicht des Mischers der Fig. 2;
- Fig. 4: eine Schnittansicht des Mischers der Fig. 3, geschnitten längs einer Linie IV-IV in Fig. 3;
- Fig. 5: den Mischer in perspektivischer Ansicht mit in Explosionsdarstellung gezeigter Heizanordnung.

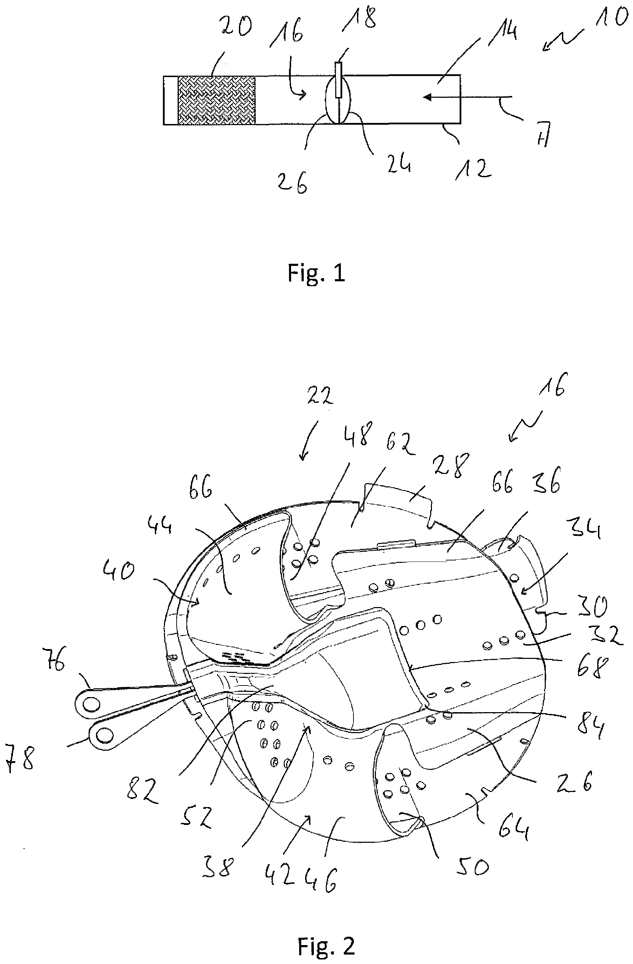

In Fig. 1 ist ein Abschnitt einer allgemein mit 10 bezeichneten Abgasanlage einer Brennkraftmaschine eines Fahrzeugs dargestellt. Die Abgasanlage 10 umfasst in einem Abgasrohr 12 einen Abgaskanal 14, in welchen das von einer Brennkraftmaschine, insbesondere einer Dieselbrennkraftmaschine, ausgestoßene Abgas A einströmt. Im Abgaskanal 14 ist ein allgemein mit 16 bezeichneter Mischer angeordnet. Dieser bedeckt im Wesentlichen den gesamten Strömungsquerschnitt des Abgaskanals 14, so dass im Wesentlichen auch das gesamte im Abgaskanal 14 strömende Abgas A durch den nachfolgend detailliert beschriebenen, im Wesentlichen scheibenartig ausgebildeten Mischer 16 hindurchströmen muss. Am Außenumfangsbereich des Mischers 16 können in schlitzartigen Zwischenräumen zwischen diesem und dem Abgasrohr 12 noch Durchströmräume vorhanden sein, in welchen ein geringer Teil des Abgases A, ohne den Mischer 16 zu durchströmen, weiterströmen kann.

Dem Mischer 16 ist eine allgemein als Injektor bezeichnete Reaktionsmittelabgabeanordnung 18 zugeordnet. Durch die Reaktionsmittelabgabeanordnung 18 kann ein Reaktionsmittel, beispielsweise eine Harnstoff/Wasser-Lösung, im Bereich des Mischers 16 in den Abgasstrom eingeleitet und mit dem Abgas A durchmischt werden. Das im Bereich des Mischers 16 somit gebildete Gemisch aus Abgas und Reaktionsmittel strömt im Abgaskanal 14 weiter zu einer Abgasbehandlungseinheit 20, welche eine SCR-Katalysatoranordnung, ggf. auch einen Partikelfilter, umfassen kann. In der SCR-Katalysatoranordnung wird zur Verringerung des Stickoxidanteils im Abgas A das im Bereich des Mischers 16 in das Abgas eingeleitete Reaktionsmittel bei einer selektiven katalytischen Reduktion umgesetzt.

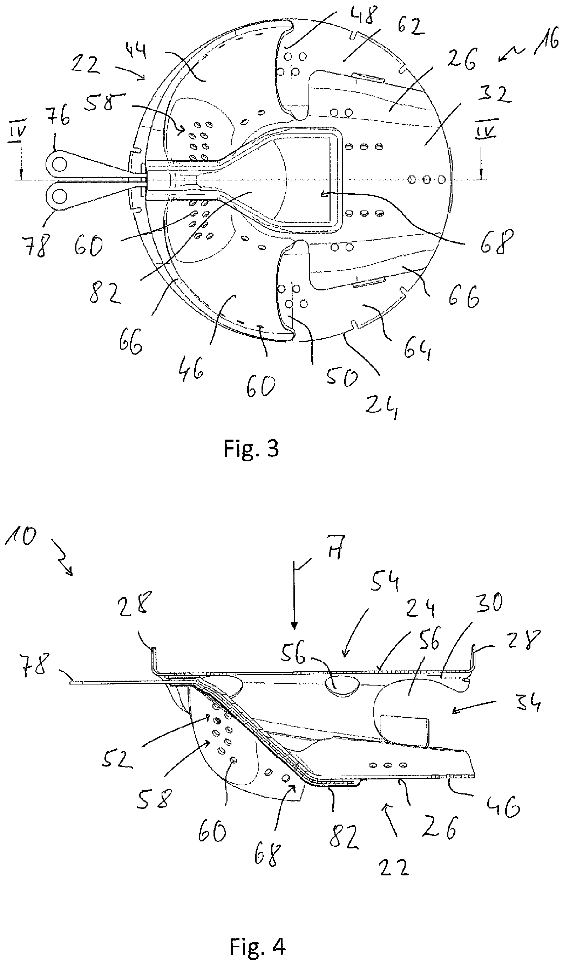

Nachfolgend wird der Aufbau des Mischers 16 mit Bezug auf die Fig. 2 bis 5 detailliert beschrieben.

Der Mischer 16 ist mit seiner im Wesentlichen scheibenartigen Gestalt mit an die Innenquerschnittsgeometrie des Abgasrohrs 12 angepasster, näherungsweise kreisrunder Außenquerschnittsgeometrie ausgebildet. Der Mischer 16 umfasst einen Mischerkörper 22 mit zwei beispielsweise als Blechumformteile bereitgestellten Mischerkörperteilen 24, 26. Das im Abgasstrom in Richtung stromaufwärts orientiert zu positionierende erste Mischerkörperteil 24 kann an seinem Außenumfangsbereich mehrere Befestigungslaschen 28 aufweisen, in deren Bereich der Mischerkörper 22 an der Innenseite des Abgasrohrs 12 festgelegt werden kann. Das erste Mischerkörperteil 24 weist in einem zentralen Bereich desselben einen ersten Auswölbungsbereich 30 auf. In Zuordnung zu dem ersten Auswölbungsbereich 30 weist auch das zweite Mischerkörperteil 26 einen zweiten Auswölbungsbereich 32 auf. Diese liegen im Wesentlichen deckungsgleich und definieren einen im Mischerkörper 22 im Wesentlichen radial, radial bezogen auf dessen kreisscheibenartige Gestalt, sich erstreckenden Reaktionsmittelaufnahmekanal 34. An einem Außenumfangsbereich ist der Reaktionsmittelaufnahmekanal 34 offen. In diesem Bereich kann die Reaktionsmittelabgabeanordnung 18 zumindest bereichsweise in den Reaktionsmittelaufnahmekanal 34 eingreifend positioniert sein, so dass das von diesr abgegebene Reaktionsmittel näherungsweise von radial außen nach radial innen in den Reaktionsmittelaufnahmekanal 34 eingeleitet wird. Dabei strömt das Reaktionsmittel ausgehend von einem Reaktionsmittelaufnahmeendbereich 36, in welchen die Reaktionsmittelabgabeanordnung 18 eingreifen kann, zu einem Abgabeendbereich 38 des Reaktionsmittelaufnahmekanals 34. In diesem Abgabeendbereich 38 geht der Reaktionsmittelaufnahmekanal 34 in zwei Abgabekanäle 40, 42 über. Diese sind im Wesentlichen bereitgestellt zwischen dritten Auswölbungsbereichen 44, 46 am zweiten Mischerkörperteil 26 und diesen gegenüberliegenden Bereichen des ersten Mischerkörperteils 24. Die beiden Abgabekanäle 40, 42 führen im Wesentlichen in entgegengesetzten Richtungen im Abgabeendbereich 38 vom Reaktionsmittelaufnahmekanal 34 weg und sind an ihren vom Abgabeendbereich 38 entfernten Ende über jeweilige Abgabekanalöffnungen 48, 50 offen. Um dabei eine effiziente und vor allem auch gleichmäßige Einleitung von Abgas und Reaktionsmittel in die Abgabekanäle 40, 42 zu erreichen, ist am zweiten Mischerkörperteil 26 zwischen den beiden dritten Auswölbungsbereichen 44, 46 eine jeweilige Ablenkflächen bereitstellende Einwölbung 52 gebildet.

Um den Eintritt von im Abgaskanal 14 strömendem Abgas A in den Mischerkörper 22, insbesondere den Reaktionsmittelaufnahmekanal 34, zu ermöglichen, ist im ersten Mischerkörperteil 30 eine Abgaseintrittsöffnungsanordnung 54 mit einer Vielzahl verschieden gestalteter und verschieden dimensionierter Abgaseintrittsöffnungen 56 vorgesehen. Diese können teilweise so angeordnet sein, dass das durch diese in den Mischerkörper 22 eintretende Abgas in den Reaktionsmittelaufnahmekanal 34 gelangt, können teilweise aber auch so angeordnet sein, dass das durch dieses eintretende Abgas in die Abgabekanäle 40, 42 einströmt. Ferner kann insbesondere am zweiten Mischerkörperteil 26 eine Austrittsöffnungsanordnung 58 mit einer Vielzahl von Austrittsöffnungen 60 vorgesehen sein. Über die Austrittsöffnungen 60 kann zusätzlich zu dem im Bereich der Abgabekanalöffnungen 48, 50 ermöglichten Austritt von Abgas bzw. Reaktionsmittel auch im Bereich der Abgabekanäle 40, 42 Abgas und mit diesem auch Reaktionsmittel aus den Abgabekanälen 40, 42 austreten.

Die beiden Mischerkörperteile 24, 26 sind miteinander vorzugsweise materialschlüssig, beispielsweise durch Verschweißung, fest verbunden. Dazu können am ersten Mischerkörperteil 24 beidseits des ersten Auswölbungsbereichs 30 Plattenbereiche 62, 64 vorgesehen sein, in deren Bereich das zweite Mischerkörperteil 26 in an den zweiten Auswölbungsbereich 32 bzw. die beiden dritten Auswölbungsbereichen 44, 46 angrenzenden Verbindungsbereichen 66 an das erste Mischerkörperteil 24 angebunden sein kann.

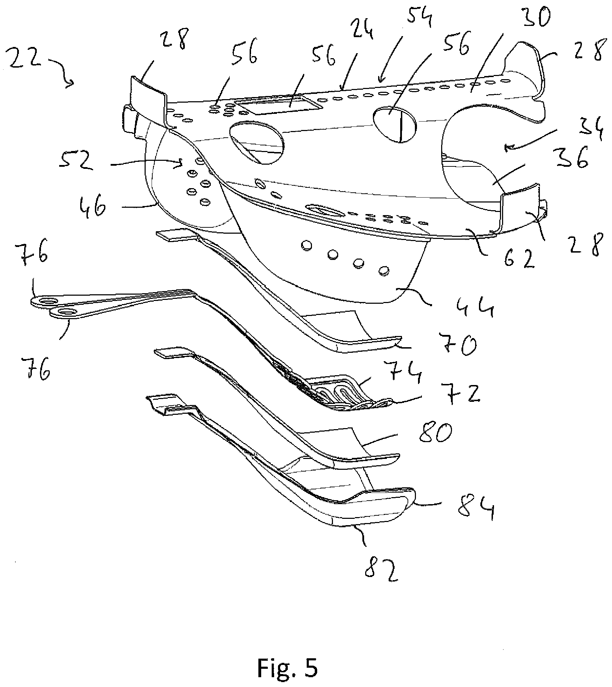

Der Mischer 16 weist ferner eine allgemein mit 68 bezeichnete Heizanordnung auf. Die Heizanordnung 68 ist am Mischerkörper 22 im Wesentlichen im Bereich des zweiten Mischerkörperteils 26 an der im Abgasrohr 12 in Richtung stromabwärts bezüglich des Abgasstroms orientiert anzuordnenden Außenseite des Mischerkörpers 22 vorgesehen. Die Heizanordnung 68 weist einen geschichteten Aufbau auf. Eine aus thermisch beständigem Material, z.B. als Glimmermatte aufgebaute erste Isolierlage 70 ist anliegend an den Mischerkörper 22, insbesondere das zweite Mischerkörperteil 26, angeordnet. Man erkennt insbesondere in Fig. 5, dass die erste Isolierlage 70 eine an die Außenkontur des zweiten Mischerkörperteils 26 insbesondere im Bereich des Einwölbungsbereichs 52 bzw. des zweiten Auswölbungsbereichs 32 angepasste Formgebung aufweist.

An der vom Mischerkörper 22 bzw. vom zweiten Mischerkörperteil 26 abgewandten Seite der ersten Isolierlage 70 ist eine allgemein mit 72 bezeichnete Heizlage angeordnet. Diese umfasst einen vorzugsweise mäanderartig gewundenen Heizleiter 74 mit zwei zur elektrischen Kontaktierung hervorstehenden Anschlussbereichen 76, 78. Zur elektrischen Kontaktierung der Heizanordnung 68 können die beiden Anschlussbereiche 76, 78 beispielsweise durch eine im Abgasrohr 12 im Bereich des Mischers 16 vorgesehene Öffnung hindurchgeführt werden. Diese Öffnung kann in einem Längenbereich des Abgasrohrs 12 vorgesehen sein, in welchem an einer diametral gegenüberliegenden Seite auch eine Öffnung für die Einführung der Reaktionsmittelabgabeanordnung 18 in den Abgaskanal 14 bzw. den Reaktionsmittelaufnahmekanal 34 des Mischers 16 vorgesehen ist.

An der vom Mischerkörper 22 bzw. auf der ersten Isolierlage 70 abgewandten Seite der Heizlage 72 bzw. des durch elektrische Erregung erwärmbaren Heizleiters 74 ist eine zweite Isolierlage 80 aus thermisch beständigem Material, z.B. als Glimmermatte ausgebildet, angeordnet. Auch diese ist, ebenso wie die Heizlage 72 und die erste Isolierlage 70, an die Formgebung des zweiten Mischerkörperteils 26 angepasst und überdeckt die Heizlage 72 in ihrem an der ersten Isolierlage 70 anliegenden Bereich vollständig.

Zur Festlegung der Heizanordnung 68 am Mischerkörper 22 ist ein allgemein mit 82 bezeichnetes Abdeckelement vorgesehen. Dieses beispielsweise ebenfalls als Blechumformteil aufgebaute Abdeckelement 82 weist eine auch der Formgebung der beiden Isolierlagen 70, 80 bzw. der Heizlage 72 entsprechende Formgebung auf und weist ferner einen Umfangsrand 84 auf, der zumindest in einigen Bereichen an dem zweiten Mischerkörperteil 26 anliegend an dieses angebunden sein kann, vorzugsweise materialschlüssig. Auch hier kann beispielsweise ein Schweißvorgang verwendet werden, um das Abdeckelement 82 am Mischerkörper 22 festzulegen, so dass die beiden Isolierlagen 70, 80 und die dazwischen angeordnete Heizlage 72 zwischen dem zweiten Mischerkörperteil 26 und dem Abdeckelement 82 festgehalten sind. Obgleich beispielsweise die beiden Isolierlagen 70, 80 mit der Heizlage 72 beispielsweise durch Verklebung oder dergleichen zu einer Baueinheit zusammengefasst sein können, kann dieser Zusammenhalt auch durch das die beiden Isolierlagen 70, 80 und die Heizlage 72 am Mischerkörper 22 festlegende Abdeckelement gewährleistet werden.

Bei Integration des Mischers 16 in das Abgasrohr 12 wird dieser so angeordnet, dass das zweite Mischerkörperteil 26 und somit auch die Heizanordnung 68 in Richtung stromabwärts bezüglich des Abgasstroms orientiert sind. Auf diese Art und Weise kann gewährleistet werden, dass die durch Erregung der Heizlage 72 bereitgestellte Wärme effizient in den Mischerkörper 22 eingeleitet werden kann. Da die Heizanordnung 68 so angeordnet ist, dass der Heizbereich 72 im Wesentlichen auch den Abgabeendbereich 38 des Reaktionsmittelaufnahmekanals 34 überdeckend angeordnet ist, wird der Mischerkörper 22 insbesondere dort durch die Heizanordnung 68 erwärmt, wo das aus der Reaktionsmittelabgabeanordnung 18 in Spray- bzw. Tröpfchenform abgegebene Reaktionsmittel primär auf die Innenoberfläche des Mischerkörpers 22 auftreffen wird. Somit kann das Reaktionsmittel effizient Wärme aufnehmen und dadurch verdampft werden. Dies gewährleistet bereits im Inneren des Mischers 16 eine effiziente Durchmischung von verdampftem Reaktionsmittel und den Mischer durchströmendem Abgas A.

## Patentansprüche

1. Mischer zur Durchmischung von in einem Abgasführungskanal (14) einer Brennkraftmaschine strömendem Abgas (A) mit in den Abgasführungskanal (14) eingespritztem Reaktionsmittel, umfassend einen Mischerkörper (22) mit
- einem Reaktionsmittelaufnahmekanal (34),
- einer Abgaseintrittsöffnungsanordnung (54) mit einer Mehrzahl von zu dem Reaktionsmittelaufnahmekanal (34) führenden Abgaseintrittsöffnungen (56),
- wenigstens einem von dem Reaktionsmittelaufnahmekanal (34) wegführenden Abgabekanal (40, 42) mit einer Abgabekanalöffnung (48, 50) zur Abgabe eines Reaktionsmittel/Abgas-Gemisches aus dem Mischerkörper (22),
wobei an dem Mischerkörper (22) eine elektrisch erregbare Heizanordnung (68) vorgesehen ist,
**dadurch gekennzeichnet, dass** die Heizanordnung (68) einen geschichteten Aufbau umfasst mit einer dem Mischerkörper (22) zugewandt oder/und an diesem anliegend angeordneten ersten Isolierlage (70), einer an der von dem Mischerkörper (22) abgewandten Seite der ersten Isolierlage (70) angeordneten, durch elektrische Erregung erwärmbaren Heizlage (72) und einer an einer vom Mischerkörper (22) abgewandten Seite der Heizlage (72) angeordneten zweiten Isolierlage (80), und dass an einer von der Heizlage (72) abgewandten Seite der zweiten Isolierlage (80) ein an dem Mischerkörper (22) festgelegtes Abdeckelement (82) vorgesehen ist, wobei die erste Isolierlage (70), die Heizlage (72) und die zweite Isolierlage (80) zwischen dem Mischerkörper (22) und dem Abdeckelement (82) gehalten sind.

2. Mischer nach Anspruch 1, **dadurch gekennzeichnet, dass** die Heizanordnung (68) an einer Außenseite des Mischerkörpers (22) angeordnet ist.

3. Mischer nach Anspruch 1 oder 2 **dadurch gekennzeichnet, dass** die Heizlage (72) einen gewunden verlaufenden Heizleiter (74) umfasst.

4. Mischer nach einem der Ansprüche 1 bis 3, **dadurch gekennzeichnet, dass** wenigstens eine Isolierlage (70, 80) mit Glimmermaterial aufgebaut ist, oder/und das das Abdeckelement (82) mit Metallmaterial aufgebaut ist.

5. Mischer nach Anspruch 4, **dadurch gekennzeichnet, dass** der Mischerkörper (22) mit Metallmaterial aufgebaut ist, und dass das Abdeckelement (82) materialschlüssig, vorzugsweise durch Verschweißen, am Mischerkörper (22) festgelegt ist.

6. Mischer nach einem der vorangehenden Ansprüche, **dadurch gekennzeichnet, dass** der Reaktionsmittelaufnahmekanal (34) einen Reaktionsmittelaufnahmeendbereich (36) und einen Abgabeendbereich (38) aufweist, wobei der wenigstens eine Abgabekanal (40, 42) von dem Reaktionsmittelaufnahmekanal (34) im Abgabeendbereich (38) wegführt, und dass die Heizanordnung (68) wenigstens im Bereich des Abgabeendbereichs (38) des Reaktionsmittelaufnahmekanals (34) am Mischerkörper (22) angeordnet ist.

7. Mischer nach einem der vorangehenden Ansprüche, **dadurch gekennzeichnet, dass** von dem Reaktionsmittelaufnahmekanal (34) zwei Abgabekanäle (40, 42) vorzugsweise in im Wesentlichen entgegengesetzten Richtungen wegführen, und dass die Heizanordnung (68) in einem Bereich zwischen den beiden Abgabekanälen (40, 42) am Mischerkörper (22) angeordnet ist.

8. Mischer nach einem vorangehenden Ansprüche, **dadurch gekennzeichnet, dass** der Mischerkörper (22) ein im Wesentlichen plattenartiges erstes Mischerkörperteil (24) und ein mit dem ersten Mischerkörperteil (24) verbundenes, im Wesentlichen plattenartiges zweites Mischerkörperteil (26) umfasst.

9. Mischer nach Anspruch 8, **dadurch gekennzeichnet, dass** das erste Mischerkörperteil (24) einen den Reaktionsmittelaufnahmekanal (34) begrenzenden ersten Auswölbungsbereich (30) und beidseits des ersten Auswölbungsbereichs (30) einen mit dem zweiten Mischerkörperteil (26) verbundenen oder/und einen Abgabekanal (40, 42) begrenzenden Plattenbereich (62, 64) umfasst, oder/und dass das zweite Mischerkörperteil (26) einen den Reaktionsmittelaufnahmekanal (34) begrenzenden zweiten Auswölbungsbereich (32) und einen den wenigstens einen Abgabekanal (40, 42) begrenzenden dritten Auswölbungsbereich (44, 46) umfasst.

10. Mischer nach Anspruch 9, **dadurch gekennzeichnet, dass** die Heizanordnung (68) am zweiten Mischerkörperteil (26) angeordnet ist.

11. Mischer nach einem vorangehenden Ansprüche, **dadurch gekennzeichnet, dass** eine Austrittsöffnungsanordnung (58) mit einer Mehrzahl von aus dem Reaktionsmittelaufnahmekanal (34) oder/und dem wenigstens einen Abgabekanal (40, 42) herausführenden Austrittsöffnungen (60) vorgesehen ist.

12. Abgasanlage für eine Brennkraftmaschine, umfassend einen Abgasführungskanal (14), einen Mischer (16) nach einem der vorangehenden Ansprüche und eine Reaktionsmitteleinspritzanordnung (18) zum Einspritzen von Reaktionsmittel in den Reaktionsmittelaufnahmekanal (34) des Mischers (16).

13. Abgasanlage nach Anspruch 12, **dadurch gekennzeichnet, dass** die Heizanordnung (68) an einer bezüglich einer Abgasströmungsrichtung in Richtung stromabwärts orientierten Seite des Mischerkörpers (22) angeordnet ist.

14. Abgasanlage nach Anspruch 12 oder 13, **dadurch gekennzeichnet, dass** der Mischer (16) in dem Abgasführungskanal (14) im Wesentlichen die gesamte Strömungsquerschnittfläche des Abgasführungskanals (14) bedeckt, oder/und dass der Reaktionsmittelaufnahmekanal (34) oder/und der wenigstens eine Abgabekanal (40, 42) sich im Wesentlichen orthogonal zu einer Abgasströmungsrichtung im Abgasführungskanal (14) erstreckt, oder/und dass die Reaktionsmitteleinspritzanordnung (18) Reaktionsmittel im Wesentlichen orthogonal zu der Abgasströmungsrichtung im Abgasführungskanal (14) einspritzt, oder/und dass stromabwärts des Mischers (16) eine Katalysatoranordnung zur selektiven Reduktion oder/und eine Partikelfilteranordnung vorgesehen ist.

## Claims

1. Mixer for mixing exhaust gas (A) flowing in an exhaust gas-carrying duct (14) of an internal combustion engine with reactant injected into the exhaust gas-carrying duct (14), comprising a mixer body (22) with
- a reactant-receiving duct (34),
- an exhaust gas inlet opening device (54) with a plurality of exhaust gas inlet openings (56) leading to the reactant-receiving duct (34), and
- at least one releasing duct (40, 42) leading away from the reactant-receiving duct (34) with a releasing duct opening (48, 50) for releasing a reactant/exhaust gas mixture from the mixer body (22),
wherein an electrically energizable heater arrangement (68) is provided at the mixer body (22),
**characterized in that** the heater arrangement (68) comprises a layered configuration with a first insulating layer (70) arranged facing or/and in contact with the mixer body (22), with a heating layer (72), which is arranged on the side of the first insulating layer (70), which side faces away from the mixer body (22) and which heating layer can be heated by electrical energization, and with a second insulating layer (80) arranged on a side of the heating layer (72), which side faces away from the mixer body (22), and that a cover element (82) fixed to the mixer body (22) is provided on a side of the second insulating layer (80), which side faces away from the heating layer (72), wherein the first insulating layer (70), the heating layer (72) and the second insulating layer (80) are held between the mixer body (22) and the cover element (82).

2. Mixer in accordance with claim 1, **characterized in that** the heater arrangement (68) is arranged on an outer side of the mixer body (22).

3. Mixer in accordance with claim 1 or 2, **characterized in that** the heating layer (72) comprises a heating conductor (74) extending in a wound manner.

4. Mixer in accordance with one of the claims 1 through 3, **characterized in that** at least one insulating layer (70, 80) is made of a mica material, or/and that the cover element (82) is made of a metallic material.

5. Mixer in accordance with claim 4, **characterized in that** the mixer body (22) is made of a metallic material and that the cover element (82) is fixed to the mixer body (22) by connection in substance, preferably welding.

6. Mixer in accordance with one of the above claims, **characterized in that** the reactant-receiving duct (34) has a reactant-receiving end area (36) and a releasing end area (38), wherein the at least one releasing duct (40, 42) leads away from the reactant-receiving duct (34) in the releasing end area (38), and that the heater arrangement (68) is arranged at the mixer body (22) at least in the area of the releasing end area (38) of the reactant-receiving duct (34).

7. Mixer in accordance with one of the above claims, **characterized in that** two releasing ducts (40, 42) lead away from the reactant-receiving duct (34) preferably in essentially opposite directions, and that the heater arrangement (68) is arranged at the mixer body (22) in an area between the two releasing ducts (40, 42).

8. Mixer in accordance with one above claims, **characterized in that** the mixer body (22) comprises an essentially plate-like first mixer body part (24) and an essentially plate-like second mixer body part (26) connected to the first mixer body part (24).

9. Mixer in accordance with claim 8, **characterized in that** the first mixer body part (24) comprises a first bulge area (30) defining the reactant-receiving duct (34) and, on both sides of the first bulge area (30), a plate area (62, 64), which is connected to the second mixer body part (26) or/and defines a releasing duct (40, 42), or/and that the second mixer body part (26) comprises a second bulge area (32) defining the reactant-receiving duct (34) and a third bulge area (44, 46) defining the at least one releasing duct (40, 42).

10. Mixer in accordance with claim 9, **characterized in that** the heater arrangement (68) is arranged at the second mixer body part (26).

11. Mixer in accordance with one above claims, **characterized in that** a discharge opening device (58) is provided with a plurality of discharge openings (60) leading out of the reactant-receiving duct (34) or/and out of the at least one releasing duct (40, 42).

12. Exhaust system for an internal combustion engine, comprising an exhaust gas-carrying duct (14), a mixer (16) in accordance with one of the above claims, and a reactant injection device (18) for injecting reactant into the reactant-receiving duct (34) of the mixer (16).

13. Exhaust system in accordance with claim 12, **characterized in that** the heater arrangement (68) is arranged on a side of the mixer body (22) oriented in the downstream direction in relation to an exhaust gas flow direction.

14. Exhaust system in accordance with claim 12 or 13, **characterized in that** the mixer (16) covers essentially the entire flow cross-sectional area of the exhaust gas-carrying duct (14) in the exhaust gas-guiding duct (14), or/and that the reactant-receiving duct (34) or/and the at least one releasing duct (40, 42) extends essentially at right angles to an exhaust gas flow direction in the exhaust gas-carrying duct (14), or/and that the reactant injection device (18) injects reactant essentially at right angles to the exhaust gas flow direction in the exhaust gas-guiding duct (14), or/and that a catalytic converter device for selective reduction or/and a particle filter device is provided downstream of the mixer (16).

## Revendications

1. Mélangeur pour mélanger des gaz d'échappement (A) s'écoulant dans un conduit de guidage de gaz d'échappement (14) d'un moteur à combustion interne avec un réactif injecté dans le conduit de guidage de gaz d'échappement (14), comprenant un corps de mélangeur (22) avec
― un conduit de réception de réactif (34),
― un dispositif d'ouverture d'entrée de gaz d'échappement (54) avec une pluralité d'ouvertures d'entrée de gaz d'échappement (56) menant au conduit de réception de réactif (34), et
― au moins un conduit de libération (40, 42) s'éloignant du conduit de réception de réactif (34) avec une ouverture de conduit de libération (48, 50) pour libérer un mélange réactif/gaz d'échappement du corps de mélangeur (22),
dans lequel un dispositif de chauffage (68) pouvant être excité électriquement est prévu au niveau du corps de mélangeur (22),
**caractérisé en ce que** le dispositif de chauffage (68) comprend une configuration en couches avec une première couche isolante (70) disposée en face et/ou en contact avec le corps de mélangeur (22), avec une couche de chauffage (72), qui est disposée sur le côté de la première couche isolante (70), opposé au corps de mélangeur (22) et laquelle couche de chauffage peut être chauffée par une excitation électrique, et avec une deuxième couche isolante (80) disposée sur un côté de la couche de chauffage (72), opposé au corps de mélangeur (22), et qu'un élément de couverture (82) fixé au corps de mélangeur (22) est prévu sur un côté de la deuxième couche isolante (80), opposé à la couche de chauffage (72), dans lequel la première couche isolante (70), la couche de chauffage (72) et la deuxième couche isolante (80) sont maintenues entre le corps de mélangeur (22) et l'élément de couverture (82).

2. Mélangeur selon la revendication 1, **caractérisé en ce que** le dispositif de chauffage (68) est disposé sur un côté extérieur du corps de mélangeur (22).

3. Mélangeur selon la revendication 1 ou 2, **caractérisé en ce que** la couche de chauffage (72) comprend un conducteur chauffant (74) s'étendant de manière enroulée.

4. Mélangeur selon l'une des revendications 1 à 3, **caractérisé en ce qu'**au moins une couche isolante (70, 80) est constituée d'un matériau de type mica, ou/et que l'élément de couverture (82) est constitué d'un matériau métallique.

5. Mélangeur selon la revendication 4, **caractérisé en ce que** le corps de mélangeur (22) est constitué d'un matériau métallique et que l'élément de couverture (82) est fixé au corps de mélangeur (22) par liaison de matière, de préférence par soudage.

6. Mélangeur selon l'une des revendications précédentes, **caractérisé en ce que** le conduit de réception de réactif (34) présente une zone d'extrémité de réception de réactif (36) et une zone d'extrémité de libération (38), dans lequel ledit au moins un conduit de libération (40, 42) s'éloigne du conduit de réception de réactif (34) dans la zone d'extrémité de libération (38), et **en ce que** le dispositif de chauffage (68) est disposé sur le corps de mélangeur (22) au moins dans la zone de la zone d'extrémité de libération (38) du conduit de réception de réactif (34).

7. Mélangeur selon l'une des revendications précédentes, **caractérisé en ce que** deux conduits de libération (40, 42) s'éloignent du conduit de réception de réactif (34), de préférence dans des directions essentiellement opposées, et **en ce que** le dispositif de chauffage (68) est disposé sur le corps de mélangeur (22) dans une zone située entre les deux conduits de libération (40, 42).

8. Mélangeur selon l'une des revendications précédentes, **caractérisé en ce que** le corps de mélangeur (22) comprend une première partie de corps de mélangeur essentiellement en forme de plaque (24) et une deuxième partie de corps de mélangeur essentiellement en forme de plaque (26) reliée à la première partie de corps de mélangeur (24).

9. Mélangeur selon la revendication 8, **caractérisé en ce que** la première partie de corps de mélangeur (24) comprend une première zone de renflement (30) définissant le conduit de réception de réactif (34) et, des deux côtés de la première zone de renflement (30), une zone de plaque (62, 64), reliée à la deuxième partie de corps de mélangeur (26) ou/et définissant un conduit de libération (40, 42), ou/et que la deuxième partie de corps de mélangeur (26) comprend une deuxième zone de renflement (32) définissant le conduit de réception de réactif (34) et une troisième zone de renflement (44, 46) définissant ledit au moins un conduit de libération (40, 42).

10. Mélangeur selon la revendication 9, **caractérisé en ce que** le dispositif de chauffage (68) est disposé au niveau de la deuxième partie de corps de mélangeur (26).

11. Mélangeur selon l'une des revendications précédentes, **caractérisé en ce qu'**un dispositif d'ouverture de sortie (58) est muni d'une pluralité d'ouvertures de sortie (60) menant hors du conduit de réception de réactif (34) ou/et hors dudit au moins un conduit de libération (40, 42).

12. Système d'échappement pour un moteur à combustion interne, comprenant un conduit de guidage de gaz d'échappement (14), un mélangeur (16) selon l'une des revendications précédentes, et un dispositif d'injection de réactif (18) pour injecter un réactif dans le conduit de réception de réactif (34) du mélangeur (16).

13. Système d'échappement selon la revendication 12, **caractérisé en ce que** le dispositif de chauffage (68) est disposé sur un côté du corps de mélangeur (22) orienté vers l'aval par rapport à une direction d'écoulement de gaz d'échappement.

14. Système d'échappement selon la revendication 12 ou 13, **caractérisé en ce que** le mélangeur (16) couvre essentiellement la totalité de la surface de section transversale d'écoulement du conduit de guidage de gaz d'échappement (14) dans le conduit de guidage de gaz d'échappement (14), ou/et que le conduit de réception de réactif (34) ou/et ledit au moins un conduit de libération (40, 42) s'étendent essentiellement à angle droit par rapport à une direction d'écoulement des gaz d'échappement dans le conduit de guidage de gaz d'échappement (14), ou/et que le dispositif d'injection de réactif (18) injecte le réactif essentiellement à angle droit par rapport à la direction d'écoulement de gaz d'échappement dans le conduit de guidage de gaz d'échappement (14), ou/et qu'un dispositif de convertisseur catalytique pour la réduction sélective ou/et un dispositif de filtre à particules est prévu en aval du mélangeur (16).
